# EUROPEAN PATENT APPLICATION

(11) **EP 1 184 795 A1**
(43) Date of publication of application: **06.03.2002**
(21) Application number: 00118612.1
(22) Date of filing: 28.08.2000
(51) Int. Cl.: G06F 17/30

(54) **Obtaining information about the contents of documents**

(71) Applicant: Sevenval AG, 50667 Köln (DE)
(72) Inventor: Sponagl, Paul, 50733 Köln (DE)
(74) Representative: Dendorfer, Claus, Dr.

(57) **Abstract**

In a method for obtaining information about the contents of a plurality of documents accessible via a computer network (10), the plurality of documents being provided in at least one page description language, the following steps are performed for each document (30) of the plurality of documents: the document (30) is accessed via the computer network (10), the document (30) is rendered by a graphical rendering module (66) to obtain a graphical representation (68) of the document (30), the graphical representation (68) is processed by a character recognition module (60) to obtain a textual representation (56) of at least a part of the document (30), and the textual representation (56) is provided to a database building module (54). A computer program product and an apparatus comprise corresponding features. The invention provides a way for reliably obtaining information about the contents of a plurality of documents even if the documents are only available in a (possibly complex) page description language format.

## Description

The present invention concerns the field of data gathering and data processing. The particular field of the present invention is that of collecting data about the contents of documents that are provided in a page description language and that are accessible via a computer network like, for example, the Internet.

A major problem in the Internet and in other large computer networks is that of finding the desired information. While a wealth of information about virtually any subject is stored somewhere in the Internet, the very size of the Internet makes it difficult to locate the data items one is looking for.

Common search engines, which are well known per se, suffer from several problems. One basic problem, which is addressed by the present invention, is that reliable information is needed about the contents of any document that is to be indexed by the search engine. This seemingly simple task poses considerable difficulties since most documents are only available in some page description language format. Each page description language document is a mixture of formatting, graphical and textual information, from which the actual contents of the document, which are to be added to the index database, must be extracted.

It is known to use a converter program for extracting textual information from documents encoded in page description languages like PostScript® and HTML (hypertext markup language). Such converter programs, however, have their limitations. Modern page description languages comprise very powerful language constructs such that complex converter programs are required. Because of this complexity, it is likely that some language constructs will not be processed properly, even if the page description language is well-defined and if a detailed specification of the individual language constructs is available.

The situation is even more difficult if the document is encoded in a proprietary page description language (like, for example, the native document format of a common application program like Microsoft® Word™). In this case, third party developers of converter programs can only try to determine the meaning of the individual language constructs by reverse engineering, and this process will normally produce results that are less than perfect.

A further difficulty is caused by the fact that some page description languages allow the inclusion of active elements like, for example, program applets. Such active elements are intended for execution by the client. They permit the dynamic generation of text or other information. However, active elements are normally not executed by a search engine, and even if they were, the results would most likely be different from the results presented to a user.

Yet a further problem arises if the documents are provided by enterprises that have some (vested or open) business interests. Consider, for example, the case of the Internet presence of a vendor of child care products. Since few users of the Internet like to visit pure advertising sites, the vendor is interested in being listed by the search engines as a provider of information and helpful hints about child care. On the other hand, when a potential customer actually visits the site, the advertising aspect is most important for the vendor. This dilemma tempts some vendors into deliberately using Internet documents that will be indexed by a search engine in one way and will be presented to the user in another way. One possibility of doing this is to use hidden text portions (e.g., text that has the same color as the background) for presenting keywords that will be indexed by most of the search engines, but are not seen by the Internet user. For the same reason, it is rather common that misleading keywords that are given in the "keyword" section of a document.

An object of the present invention is therefore to solve some or all of the above-mentioned problems. A further object is to provide a way for reliably obtaining information about the contents of a plurality of documents even if the documents are only available in a (possibly complex) page description language format. Yet a further object of preferred embodiments is to prevent inadvertent or deliberate manipulation of the information that is collected. Still a further object of preferred embodiments is to provide a procedure for obtaining information that is especially suited for use in Internet search engines.

According to the invention, these and other objects are solved by the method, the computer program product, the use and the apparatus defined in the independent claims. The dependent claims concern preferred embodiments of the invention. The order in which the method steps are recited in the claims shall not be construed as a limitation of the invention since the steps of the inventive method may also be performed in another sequence or at least partially in parallel or at least partially in an interleaved (semi-parallel) fashion.

The invention is based on the idea of performing two steps that may seem to be rather wasteful. The first step is that of graphically rendering each document from which information is to be gathered, and the second step is that of analyzing the graphical representation of the document by a character recognition method. Considering that the documents are available in digital form in the first place, the transformation into a graphical representation and then back into a textual representation might look like an unnecessary detour. The expert would normally avoid these steps because a substantial amount of computing resources (time, memory, computing power) is needed. However, the surprising result is that substantial improvements with respect to the quality of the output are possible by employing the teaching of the present invention.

The present invention avoids the problems associated with analyzing and converting documents written in page description languages. Instead of a complex converter module, only a rendering module is required for each page description language that is to be processed. High quality rendering modules are available for virtually all page description languages, including proprietary languages and application program document formats. After the graphical representation of the document has been produced by the rendering module, the further character recognition step is independent of the kind of page description language the document was originally written in. Again, a high quality character recognition module may be used. This module may essentially be the same as in a program for optical character recognition (OCR) of scanned documents.

In the terminology used herein, the term "page description language" is intended to comprise all kinds of standardized or proprietary languages and data structures that contain some kind of markup information. Examples for such page description languages are the languages known under the names and trademarks HTML (hypertext markup language), XML (extensible markup language), PostScript, PDF (portable document format developed by Adobe Systems, Inc.), TeX and LaTeX. Proprietary application document languages like, for example, the native document formats of the programs known under the trademarks Microsoft Word and Microsoft PowerPoint are preferably also considered as page description languages in this sense.

In preferred embodiments, the page description language comprises text elements representing at least some of the textual contents of a document and markup elements influencing the graphical appearance of the text elements when the document is rendered. It is the basic functionality of the rendering module to process such language constructs properly. Some page description languages further comprise graphical elements, which may already contain all graphic data or may be just references to separate graphic files. The rendering module will preferably also process such graphical elements properly and will produce corresponding graphical portions in the graphical representation of the document.

In further preferred embodiments, active program elements of the page description language are also processed in the rendering step. Active program elements are parts of the document or references to other files that need to be interpreted or executed in the some sense. Examples of active program elements are scripts and applets and also streaming data formats. Preferably, such active programs elements are executed in an appropriate environment simulating a surfing session of a human user, and any output of the active program elements is rendered and included in the graphical representation of the document.

When processing the graphical representation by the character recognition module, it is preferred to first determine which regions of the graphical representation contain relevant information about the actual contents of the document (as opposed to, for example, third party advertising regions or mere pictures). Only these relevant regions need to be further processed by the character recognition module.

It is preferred to use the present invention for obtaining information that is used in search engines, in particular in Internet search engines. The textual representation obtained by the present invention may, for example, be used by the search engine for building a database entry for the presently processed document, and/or for building a search index for a plurality of documents.

In embodiments which incorporate a browser (e.g., an Internet browser), a preferred further development is to use the browser for identifying links or references in the currently processed document. These links may be followed in the process of walking through a network of documents hyperlinked to each other. One possible way of identifying link regions is to monitor the shape of a cursor displayed by the browser when the cursor is moved over the graphical representation. Such cursor movements (and also mouse clicks for following a link) may be simulated by an appropriate user simulation module.

The computer program product, the use and the apparatus of the present invention preferably also comprise the features mentioned above and/or in the dependent method claims.

Further features, objects and advantages will become apparent from the drawings and the following detailed description of several sample embodiments of the present invention. Reference is made to the schematic drawings, in which:
Fig. 1 is a schematic representation of several computers and data repositories connected to a computer network,
Fig. 2 is an example of some elements of a document provided in the HTML page description language,
Fig. 3 is a schematic representation of the program modules of a sample embodiment of the present invention, and
Fig. 4 is a flow diagram of the sample embodiment shown in Fig. 3.

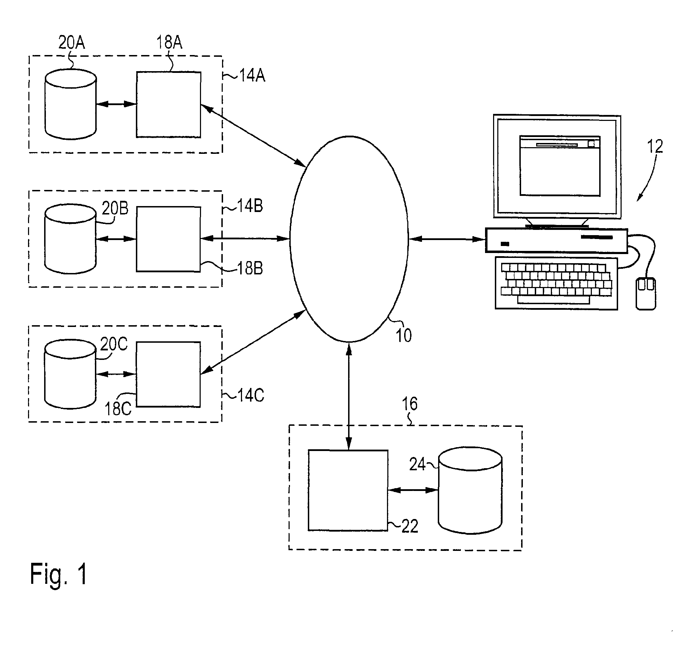

In the representation of Fig. 1, a plurality of computers and data repositories are connected to a computer network 10. The computer network 10 may be of any kind, but it will often be an heterogeneous and/or wide-range network like the Internet. As examples of the many devices connected to the computer network 10, a client computer 12, several information providers 14A, 14B, 14C and a search engine 16 are shown in Fig. 1. At the abstraction level of Fig. 1, the system shown therein represents both the prior art (if the search engine 16 is a standard Internet search engine) and the system of the present invention (if the search engine 16 operates according to the teachings of the present invention).

The client computer 12 is a common personal computer executing a well-known Internet browser. The information providers 14A, 14B, 14C each comprise a powerful server computer 18A, 18B, 18C and a data repository 20A, 20B, 20C. Each data repository 20A, 20B, 20C stores a large number of documents for access via the computer network 10. The search engine 16 comprises a powerful search engine computer 22 and a database 24. The database 24 holds both a search index that is accessed when replying to search queries from the client computer 12 and more detailed information about any document that is listed by the search engine 16. In alternative embodiments, the search engine computer 22 and the database 24 may be a distributed computer system and a distributed database, respectively.

The present invention in concerned with the process of collecting the information that is to be stored in the database 24. It is well-known that the search engine 16 builds the contents of the database 24 by visiting the various information providers 14A, 14B, 14C on a regular basis. In this process, the documents stored in the data repositories 20A, 20B, 20C are accessed and analyzed by the search engine 16 for building and/or updating its database 24. The programs that perform this task are commonly called "search robots".

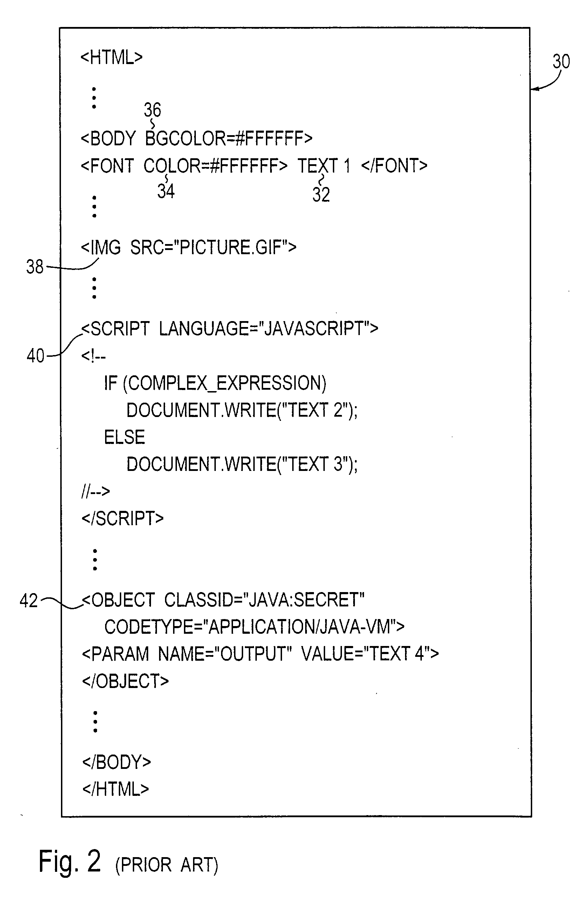

Fig. 2 depicts an example of a document 30 as it may be accessed by a search robot. The document 30 is written in the page description language HTML. It contains several examples of constructs that might cause difficulties when analyzed by the search engine 16. The first portion of the document 30 comprises a text element 32 reading "TEXT 1". However, this text element 32 is surrounded by a first markup element 34 specifying black as the color of the text when displayed. Since the background color has also been specified as black in a second markup element 36, the text "TEXT 1" will actually not be visible to the user on the screen of the client computer 12 when the document 30 is accessed. Consequently, it would be desirable to ignore text element 32 during processing of the document 30 by the search engine 16.

The next construct shown in the document 30 is a graphical element 38. When viewing the document 30 on the client computer 12, this construct causes a picture file having the filename "PICTURE.GIF" to be accessed and its contents to be displayed. The picture may contain some text, in particular text that will attract the attention of the user because some kind of emphasis (e.g., special fonts, bold characters, etc.) is used. It is therefore important that any text components contained in picture will also be taken into account when the document 30 is indexed by the search engine 16.

The document 30 further contains, as examples, two active program elements 40, 42. These are constructs that are intended to be interpreted or executed in some way by the browser running on the client computer 12. The first active program element 40 is a script written in the language JavaScript®. This script produces an output of either "TEXT 2" or "TEXT 3", depending on the value of a (possibly complex) expression. Proper indexing of the document 30 requires that some decision is made which of these two outputs will be produced.

The second active program element 42 is a call for execution of an applet that is available in a pre-compiled byte code of the programming language Java®. The applet receives a parameter with the name "OUTPUT" and the value "TEXT 4". This value may or may not have some relation to the actual output of the applet, which can only be determined by executing the applet in its proper environment.

It is apparent that it would be difficult or even impossible for the search engine 16 to properly index the document 30 using the prior art technique of a text-based analysis. While the constructs of Fig. 2 themselves may be contrived examples, many actual Internet documents contain just the same type of language elements. The background color text element 32 is an example of an attempt to manipulate the search engine 16, while compelling and legitimate reasons may exist for using the other elements 38 - 42.

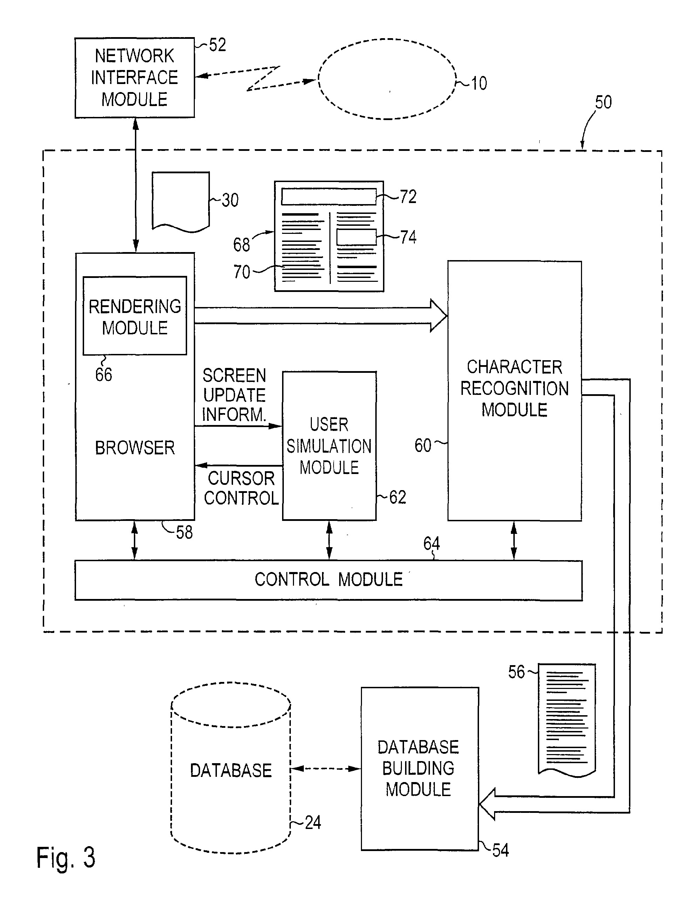

Fig. 3 shows the essential program components of a sample embodiment of the present invention. All these program modules (depicted by continuous line boxes in Fig. 3) are executed by the search engine computer 22 (Fig. 1). The computer network 10 and the database 24 are shown in dashed lines in Fig. 3 to indicate the connection of the program modules of Fig. 3 with these components.

The core of the present invention is an information distilling system 50, which is indicated by a dashed box in Fig. 3. The information distilling system 50 interfaces with the computer network 10 via a network interface module 52, and it interfaces with the database 24 via a database building module 54. The information distilling system 50 performs all steps of processing the page description language document 30 obtained from the computer network 10 to produce a textual representation 56, which is forwarded to the database building module 54.

The textual representation 56 is intended to mirror the actual information contents of the document 30 as accurately as possible. In this context, the expression "actual information contents" means the contents that would be understood by a human user when accessing the document 30 by the Internet browser of the client computer 12. The textual representation 56 may be in a plain (e.g., ASCII) text format, or it may contain some restricted amount of formatting information (e.g., font size information) which may be used by the database building module 54 for distinguishing important and less important portions of the information provided in the document 30.

It is to be understood that the network interface module 52 and the database building module 54 are well-known per se. The network interface module 52 is normally part of the operating system of the search engine computer 22. It implements standard communication protocols (e.g., TCP/IP) for accessing the information providers 14A, 14B, 14C via the computer network 10. The database building module 54 is already present in prior art search engines. While this module will normally be rather complex, it is not part of the present invention and therefore does not need to be described in detail.

The information distilling system 50 comprises, as its main modules, a browser 58, a character recognition module 60, a user simulation module 62 and a control module 64. The browser 58 in turn comprises a rendering module 66. The browser 58 may be a standard Internet browser, for example one of the browsers known under the trademarks Microsoft Internet Explorer and Netscape Navigator. Alternatively, the browser 58 may be a customized version, which may be derived form present open source projects (e.g., the Mozilla project) by rather small modifications. The rendering module 66 of the browser 58 serves for graphically rendering documents that are written in a large variety of page description languages. The browser 58 may also contain a plurality of so-called plugins for even further expansion of the range of page description languages that may be processed. In particular, plugins for processing and rendering proprietary application formats like the native data formats of common word processors or drawing programs may be used.

The result of rendering a page description language document 30 is a graphical representation 68 of this document. Corresponding to the various language elements of the document 30, the graphical representation 68 will contain text portions (e.g., 70) and graphical portions (e.g., 72, 74). The graphical representation is further processed by the character recognition module 60, and the output of the character recognition module 60 is the textual representation 56 of the document 30. The character recognition module 60 may be a common optical character recognition (OCR) program like, for example, the program sold under the trademark Caere OmniPage. It is an important feature of the present sample embodiment that the information distilling system 50 is built to a large extent from off-the-shelf standard products, which perform complex functions that would otherwise require a very large development effort.

The user simulation module 62 receives screen update information from the browser 58 and sends cursor control commands back to the browser 58. One of the tasks of the user simulation module 62 is to simulate the actions of a user surfing the Internet such that hyperlinks may be identified and an appropriate environment for execution of any active program elements (e.g., 40, 42) of the document 30 is created.

The control module 64 exercises the overall control of all components of the information distilling system 50. In the present sample embodiment, the control module 64 uses a variety of operating system functions to direct and co-ordinate the operation of the browser 58 and the character recognition module 60. For example, the browser 58 is called by the control module 64 with the URI (unique resource identifier) of each document 30 that is to be processed. After rendering of the document 30, the standard screenshot functionality of the operating system of the search engine computer 22 is used to obtain the graphical representation 68. The control module 64 then calls the character recognition module 60 for further processing of the graphic file produced by the screenshot.

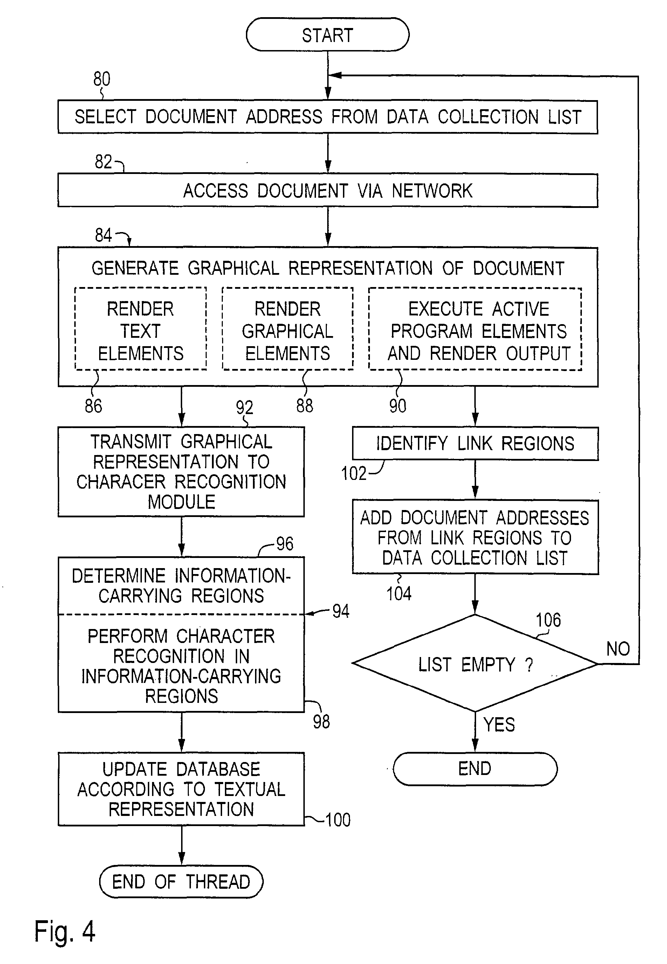

A more detailed chart of the operation of the information distilling system 50 is shown in Fig. 4. It is assumed that an initial list of document addresses (e.g., URIs) is available when execution of the method of Fig. 4 starts. This initial list may, for example, contain the addresses of Internet homepages that have been registered with the search engine 16. As the first step 80 of the flow diagram, the control module 64 selects a document address from the list. Then the browser 58 is called and accesses the corresponding document 30 from one of the information providers 14A, 14B, 14C via the network interface module 52 and the computer network 10 (step 82).

The next step 84 concerns the generation of the graphical representation 68 by the rendering module 66 of the browser 58. There are three distinct sub-steps 86, 88, 90, which may be executed sequentially or in parallel or in an interleaved (quasi-parallel) fashion. In sub-step 86, text elements (e.g., element 32 of Fig. 2) are rendered, taking into account the applicable markup data (e.g., elements 34, 36 of Fig. 2). The general font size of the browser 58 will be set to a rather large value such that high quality characters are produced in the rendering process to ensure error-free operation of the character recognition module 60.

Sub-step 88 concerns the rendering of graphical elements (e.g., element 38 of Fig. 2) into corresponding portions (e.g., graphical portions 72, 74 of Fig. 3) of the graphical representation 68. This sub-step 88 may involve further accesses to the information providers 14A, 14B, 14C for obtaining files that are referenced in the graphical elements. Plugins may be needed for the browser 58 to process less common graphics formats. As an alternative, dedicated programs may be called by the browser 58 or the control module 64 for rendering some types of graphic files (e.g., the program GhostScript may be used for PostScript and PDF files).

Execution of active program elements (e.g., elements 40 and 42 of Fig. 2) takes place in sub-step 90. While the browser 58 itself will be able to interpret script languages like JavaScript and program applets written in languages like Java, additional plugins are used for interpreting other data formats. This includes in particular streaming data formats like those known under the trademarks MacroMedia Flash and MacroMedia Shockwave. Again, any output generated as a result of execution of the active program elements will be rendered and included in the graphical representation 68. Some heuristic rules are implemented in the control module 64 for coping with active program elements that require user interaction. In a very simple embodiment, there is just a fixed timeout interval, and any execution of active program elements is terminated upon occurrence of this timeout.

The control module 64 completes step 84 by initiating the operating system screenshot function, thus creating a file that contains the graphical representation 68. In alternative embodiments, data from the rendering module 66 is directly accessed instead of taking a screenshot.

After completion of step 84, execution continues in two parallel or interleaved threads in the present sample embodiment. The first thread (steps 92 - 100) is concerned with the further processing of the graphical representation 68 and eventual generation of the textual representation 56. The second thread (steps 102 - 106) is performed to identify hyperlinks in the document 30 for further exploration of the available documents.

In step 92 of the first thread, the graphical representation 68 is transmitted or made accessible to the character recognition module 60. This step may simply consist of the control module 64 calling the character recognition module 60 with the filename of the graphical representation as a parameter of the call. The character recognition module 60 then analyzes the graphical representation 68 and generates the textual representation 56 therefrom in step 94.

Step 94 comprises two sub-steps, namely a first sub-step 96 of determining information-carrying regions in the graphical representation 68, and a second sub-step 98 of performing the actual character recognition process in these regions. In simple embodiments of the present invention, all portions of the graphical representation 68 containing text characters are considered to be "information-carrying regions" and are therefore processed in sub-step 98. The structure of the graphical representation 68 of Fig. 3 having two text columns is taken into account such that the final textual representation 56 will contain the text portions of the graphical representation 68 in the correct order.

In the present, more sophisticated embodiment, an "information-carrying region" is understood as a portion of the graphical representation 68 that contains information relevant with respect to the actual contents of the document 30. Heuristic rules are applied by the control module 64 and/or the character recognition module 60 to determine these information-carrying regions, and to exclude regions that do not seem to be relevant. For example, it may be determined in sub-step 96 that the graphical portion 72 likely contains a banner advertisement because of its typical size and location and because it was obtained from a site known as an advertisement provider. Thus graphical portion 72 will not be considered as an information-carrying region in sub-step 98. As a further example, the graphical portion 74 may contain a picture together with a text caption, and the information-carrying regions may be determined in such a way that the text caption is included, but the picture is excluded from the character recognition process.

As mentioned above, the actual character recognition process in sub-step 98 is performed by the character recognition module 60 in a way that is known per se. While character recognition is a complex task that may include the use of artificial intelligence methods and/or neuronal networks, it is not the core of the present invention and therefore does not need to be described in detail. The output of the character recognition process, namely the textual representation 56, is used in step 100 by the database building module for creating and/or updating entries in the database 24 as appropriate. This completes the processing steps of the first thread.

The second parallel execution thread starts with an identification of link regions in the graphical representation 68 (step 102). In the present sample embodiment, the user simulation module 62 is used for this task. The user simulation module 62 issues appropriate cursor control commands to the browser 58, simulating a human user who moves the cursor across the graphical representation 68. Link regions can be identified from the fact that the cursor shape changes from the standard arrow shape to a hand shape when the cursor is positioned over a hyperlink. This shape change is detected by the user simulation module 62 on the basis of the screen update information supplied by the browser 58.

The address (URI) of the document to which the hyperlink of each link region points is identified and added to the data collection list in step 104. One way of determining this address is to monitor the corresponding indicator line displayed by the browser 58. Another possible way would be to simulate a mouse click of the user into the link region. This causes the browser 58 to follow the hyperlink, and the new document address may then be gathered from the address line of the browser 58. Thereafter a mouse click onto the "back" command field of the browser 58 is simulated to restore the former display.

Some checks are made before a new address is added to the data collection list in step 104. For example, duplicate addresses are not added to the list. There may also be a predefined maximum depth up to which internet presences are explored, starting from their respective homepages.

The data collection list may be empty if no new addresses have been added to it in step 104. If this condition is detected in step 106 ("YES" branch), execution ends. If the data collection list still contains addresses ("NO" branch of step 106), program execution continues with step 80 for a new document 30.

In alternative embodiments, the task of identifying and following hyperlinks in the document 30 is performed in a different manner. For example, the document 30 itself can be analyzed for finding any hyperlinks embedded therein. If this approach is taken, the user simulation module 62 may possibly be omitted from the information distilling system 50, and step 102 will be replaced by a step of analyzing the document 30 in its original page description language format.

Alternatively, link regions in the graphical representation 68 may be identified graphically, for example on the basis of their specific color and text format (e.g., blue and underlined). The disadvantage of this approach is that is would be difficult or impossible to identify links that are embedded in picture regions.

As a further alternative, the data collection list may contain not document addresses, but references to memory dumps of the working memory of the browser 58 in the search engine computer 22. This would render it superfluous to identify any addresses of hyperlinks. Following a hyperlink would simply mean that the user simulation module 62 performs a simulated mouse click into one of the identified link regions. During backtracking, each former state of the browser 58 can be restored from the appropriate memory dump.

It is thus apparent that the invention can be used for obtaining information about the contents of a plurality of documents in a very reliable and manipulation-proof way. The particulars contained in the above description of sample embodiments should not be construed as limitations of the scope of the invention, but rather as exemplifications of preferred embodiments thereof. Many other variations are possible and will be readily apparent to persons skilled in the art. For example, instead or in addition to the browser 58, any other program may be used for processing and rendering the document 30, depending on the particular page description language the document 30 is written in. The scope of the invention should accordingly be determined not by the embodiments illustrated, but by the appended claims and their legal equivalents.

## Claims

1. A method for obtaining information about the contents of a plurality of documents accessible via a computer network (10), said plurality of documents being provided in at least one page description language, said method including the steps of, for each document (30) of said plurality of documents:
- accessing (82) the document (30) via said computer network (10),
- rendering (84) said document (30) by a graphical rendering module (66) to obtain a graphical representation (68) of said document (30),
- processing (94) said graphical representation (68) of said document (30) by a character recognition module (60) to obtain a textual representation (56) of at least a part of said document (30), and
- providing said textual representation (56) to a database building module (54).

2. The method of claim 1,
wherein said page description language comprises text elements (32) representing at least some of the textual contents of the document (30) and markup elements (34, 36) influencing the graphical appearance of said text elements (32) when said document (30) is rendered.

3. The method of claim 1 or claim 2,
wherein said page description language comprises graphical elements (38), and
wherein the rendering step (84) comprises the sub-step (88) of including graphical portions (72, 74) corresponding to said graphical elements (38) in said graphical representation (68) of said document (30).

4. The method of one of claims 1 to 3,
wherein said page description language comprises active program elements (40, 42), and wherein the rendering step (84) comprises the sub-steps (90) of:
- executing said active program elements (40, 42),
- rendering any output obtained in said executing sub-step, and
- including any rendered output obtained in said rendering sub-step in said graphical representation (68) of said document (30).

5. The method of one of claims 1 to 4,
wherein said at least one page description language is/are selected from the group consisting of the languages HTML, XML, PostScript, PDF, TeX, LaTeX and proprietary application document languages.

6. The method of one of claims 1 to 5,
wherein the processing step (94) comprises the sub-steps of:
- determining (96) at least one information-carrying region in said graphical representation (68) of said document (30), and
- obtaining (98) the textual representation (56) of said at least one information-carrying region in said graphical representation (68) of said document (30) by said character recognition module (60).

7. The method of one of claims 1 to 6,
wherein said textual representation (56) is used (100) by said database building module (54) for building database entries for said plurality of documents and/or for building a search index for use in searching for documents in said computer network (10).

8. The method of one of claims 1 to 7,
wherein said computer network (10) is a wide area computer network, in particular the Internet, and wherein said rendering module (66) is comprised in browser (58), in particular an Internet browser.

9. The method of claim 8,
further comprising the steps of:
- using said browser (58) for identifying (102) at least one link embedded in said document (30), and
- following (104, 80) said at least one link for accessing (82) at least one further document via said computer network (10).

10. The method of claim 9,
wherein said at least one link is identified (102) by monitoring the shape of a cursor displayed by said browser (58) in said graphical representation (68) of said document (30).

11. A computer program product for execution by at least one general purpose computer (22) for collecting data from a plurality of documents accessible via a computer network (10), said computer program product including instructions for making said at least one general purpose computer (22) perform the steps of the method of one of claims 1 to 10.

12. Use of an Internet browser (58) and an optical character recognition program (60) in a computer program product according to claim 11.

13. An apparatus comprising at least one general purpose computer (22) programmed for performing the steps of the method of one of claims 1 to 10.
